# DEMANDE DE BREVET EUROPEEN

(11) **EP 0 816 701 A1**
(43) Date de publication de la demande: **07.01.1998**
(21) Numéro de dépôt: 97401529.9
(22) Date de dépôt: 01.07.1997
(51) Int. Cl.: F16C 39/06

(54) **Palier magnétique actif longitudinalement et transversalement**

(30) Priorité: 05.07.1996 FR 9608413
(71) Demandeur: AEROSPATIALE Société Nationale Industrielle, 75781 Paris Cédex 16 (FR)
(72) Inventeur: Lambert, Charles, 06150 Cannes La Bocca (FR); Frere, Jean-Yves, 75011 Paris (FR)
(74) Mandataire: Rinuy, Santarelli

(57) **Abrégé**

Pour centrer de manière active une partie rotorique ferromagnétique (1) par rapport à une partie statorique (2), un palier magnétique comporte au moins une première bobine (24) et des premières pièces polaires (21, 22) disposées transversalement à l'axe de rotation, ladite première bobine et lesdites premières pièces polaires étant agencées pour centrer activement la partie rotorique par rapport à la partie statorique selon l'axe de rotation (Z-Z) du palier magnétique, et des secondes bobines (29) et une seconde pièce polaire (27), disposées entre lesdites première pièces polaires et ladite partie rotorique, lesdites secondes bobines et ladite seconde pièce polaire étant agencées pour centrer activement la partie rotorique par rapport à la partie statorique selon au moins un axe transversal (X-X, Y-Y) du palier magnétique.

## Description

La présente invention concerne d'une manière générale un palier magnétique comportant un circuit magnétique formé d'une partie fixe et d'une partie mobile sans contact.

De manière connue, par exemple par le document US-A-4.918.345, un palier magnétique est utilisé pour le centrage magnétiquement actif, selon un ou deux axes de centrage, d'un corps mobile par rapport à un autre corps. Les deux corps comportent des portions ferromagnétiques, sans contact, formant conjointement le palier, et le corps mobile est dit en suspension. Un centrage magnétiquement actif implique l'utilisation d'un bobinage dans lequel circule un courant réglable propre à générer un flux magnétique réglable dans des entrefers variant parallèlement à l'axe de centrage.

Il est ainsi connu de centrer, par un palier magnétique, selon un axe (parfois de rotation) longitudinal, ou selon un axe transversal, ou encore selon deux axes transversaux. Généralement, un tel palier comporte en outre des aimants permanents qui peuvent soit compléter l'action des bobinages, soit, dans certaines configurations, assurer un centrage passif selon un ou plusieurs autres axes.

Par exemple, un palier magnétique à corps tournant peut assurer un centrage actif selon deux axes transversaux, ou radiaux, et un centrage passif selon l'axe de rotation, ou axe longitudinal. En variante, il peut n'y avoir un centrage actif que selon l'axe de rotation.

Dans certains cas, un centrage actif selon l'axe longitudinal et au moins un axe transversal est nécessaire pour assurer un positionnement transversal de la partie mobile par rapport à la partie fixe, tout en ayant un positionnement longitudinal précis. On utilise alors un premier palier magnétique actif selon l'axe longitudinal («palier longitudinal ou axial») et un second palier magnétique actif selon un ou deux axes transversaux perpendiculaires au précédent («palier transversal, ou radial»).

Ces deux paliers doivent être découplés magnétiquement pour agir indépendamment l'un de l'autre sur la partie mobile. Pour cela, ils sont séparés l'un de l'autre et sont par exemple juxtaposés suivant l'axe longitudinal du palier.

Un tel agencement de paliers, s'il permet un centrage actif selon l'axe longitudinal et au moins un axe transversal, et donc un asservissement de position suivant ces axes, présente néanmoins l'inconvénient d'occuper un volume important en raison de la juxtaposition des deux paliers.

En outre, la fabrication de cet agencement est complexe et délicate. Par exemple, la partie statorique du palier actif suivant l'axe longitudinal doit être insérée et positionnée entre deux pièces polaires frettées sur la partie rotorique, tandis que les éléments du palier actif transversalement, juxtaposé au précédent, doivent également être montés et positionnés les uns par rapport aux autres.

Ces inconvénients sont encore plus nets lorsque, comme cela est courant, le rotor est suspendu par deux paliers radiaux décalés axialement et que, pour des raisons d'efficacité et de minimisation d'encombrement, le palier axial est disposé entre les paliers radiaux.

La présente invention vise à remédier aux inconvénients de la technique antérieure, en fournissant un palier magnétique pour un corps tournant, qui est actif selon un axe longitudinal et au moins un axe transversal, d'un volume plus réduit, et plus simple à fabriquer que selon la technique antérieure, avec toutefois un niveau équivalent de performances.

A cette fin, l'invention propose un palier magnétique pour le centrage d'un corps rotatif mobile sans contact par rapport à un corps fixe autour d'un axe de rotation, ayant au moins un axe transversal perpendiculaire à l'axe de rotation, et comportant
- deux circuits magnétiques disposés symétriquement de part et d'autre de l'axe de rotation, le long de l'axe transversal, et formés chacun de première et seconde parties ferromagnétiques destinées à être portées respectivement par lesdits corps et séparées par deux entrefers principaux décalés parallèlement à l'axe de rotation, la première partie ferromagnétique comportant deux pièces polaires principales perpendiculaires à l'axe de rotation, et la seconde partie ferromagnétique étant une couronne magnétique,
- des moyens à aimantation permanente parallèle à l'axe de rotation, disposés entre les pièces polaires principales de chaque circuit magnétique et générant des flux magnétiques au travers des entrefers principaux,
- au moins une première bobine adaptée à générer dans au moins l'un des circuits magnétiques un flux magnétique commandable dans les entrefers principaux,
ce palier magnétique étant caractérisé en ce que
- les entrefers principaux sont d'épaisseur variable parallèlement à l'axe de rotation, grâce à quoi la première bobine assure un centrage parallèlement à cet axe de rotation,
- une pièce ferromagnétique intermédiaire globalement annulaire et perpendiculaire à l'axe de rotation, solidaire de chaque première partie ferromagnétique, est disposée entre les pièces polaires principales de chaque première partie ferromagnétique et est séparée de la couronne ferromagnétique par deux entrefers intermédiaires décalés parallèlement à l'axe transversal et d'épaisseur variable parallèlement à ce dernier,
- les moyens à aimantation permanente comportent, dans chaque première partie ferromagnétique, deux aimants à sens opposés d'aimantation enserrés entre les pièces polaires principales et la pièce polaire intermédiaire, respectivement, et
- au moins une seconde bobine est disposée en sorte de générer dans la pièce polaire intermédiaire un flux magnétique commandable traversant les deux entrefers intermédiaires, grâce à quoi ladite seconde bobine assure un centrage transversal.

Une telle structure de palier magnétique présente l'avantage que les trajets des premiers et second flux magnétiques générés par les première(s) et secondes bobines se croisent sensiblement perpendiculairement dans la seconde partie ferromagnétique. L'agencement de palier magnétique selon l'invention permet un centrage actif selon l'axe longitudinal et au moins un axe transversal du palier magnétique, tout en étant plus compact que les dispositifs connus. En outre, les circuits de centrage longitudinal et transversal sont magnétiquement découplés.

Selon une première caractéristique préférée, les premières parties ferromagnétiques sont destinées à être portées par le corps fixe.

Selon un mode de réalisation préféré, deux autres circuits magnétiques de même structure sont disposés de part et d'autre de l'axe de rotation le long d'un second axe transversal de centrage avantageusement perpendiculaire à l'axe de rotation, comportant deux autres premières parties ferromagnétiques coopérant avec la couronne ferromagnétique au travers de deux autres entrefers principaux d'épaisseur variable parallèlement à l'axe de rotation, une bobine étant adaptée à générer un flux magnétique commandable dans ces deux autres circuits magnétiques, d'autres aimants permanents à sens opposés d'aimantation étant disposés dans ces deux autres premières parties ferromagnétiques de part et d'autre de la pièce polaire intermédiaire, ladite pièce polaire intermédiaire étant séparée de la couronne magnétique par deux autres entrefers intermédiaires, et au moins une bobine étant adaptée à générer un flux magnétique commandable dans lesdits deux autres entrefers intermédiaires.

Le palier selon l'invention permet ainsi un centrage selon deux axes transversaux et selon l'axe de rotation.

Selon une caractéristique préférée, ladite au moins une première bobine est en forme de couronne cylindrique et lesdites pièces polaires principales sont des disques parallèles, perpendiculaires à l'axe de rotation du palier magnétique, disposés de part et d'autre de la première bobine, ladite première bobine et lesdites pièces polaires principales étant centrées sur l'axe de rotation.

Les entrefers principaux sont formés à l'un des diamètres inférieur ou supérieur desdites pièces polaires principales. Lorsque la première bobine est traversée par un courant électrique, elle génère un flux magnétique qui passe dans les pièces polaires principales et dans la couronne magnétique, au travers des entrefers principaux.

Avantageusement, la première partie ferromagnétique comporte une pièce ferromagnétique cylindrique entre lesdites pièces polaires principales, à l'autre des diamètres supérieur ou inférieur desdites pièces polaires principales. Cette pièce ferromagnétique contribue au trajet du flux magnétique généré par la première bobine.

Avantageusement, les moyens à aimantation permanente comportent deux aimants permanents en forme de couronne cylindrique centrée sur l'axe de rotation. Les aimants créent un équilibre instable entre les parties rotorique et statorique, et contribuent au découplage magnétique des circuits de centrage longitudinal et transversal.

Selon une autre caractéristique, les moyens à aimantation permanente comportent plusieurs paires d'aimants permanents répartis autour de l'axe de rotation. Ces aimants, de taille plus réduite, sont plus faciles et plus économiques à fabriquer que les précédents.

Selon une caractéristique préférée, ladite seconde bobine est une bobine en haricot.

Lorsqu'elle est traversée par un courant électrique, la seconde bobine génère un flux magnétique dont les lignes de flux demeurent sensiblement transversales au palier magnétique.

La couronne magnétique comporte avantageusement une collerette sensiblement en vis à vis de la pièce ferromagnétique intermédiaire. Cette collerette contribue au centrage transversal de la couronne magnétique par rapport à la première partie ferromagnétique.

La couronne magnétique comporte des collerettes s'étendant sensiblement en vis à vis desdites pièces polaires principales. Ces collerettes facilitent le passage du flux magnétique au travers des premiers entrefers.

Les caractéristiques et avantages de la présente invention apparaîtront plus clairement à la lecture de plusieurs réalisations illustrées par les dessins ci-joints, dans lesquels :
- la figure 1 est un premier mode de réalisation de palier magnétique selon l'invention, en coupe longitudinale schématique dans un plan contenant un axe de référence Z-Z,
- la figure 2 est une vue en coupe transversale selon la ligne II-II représentée à la figure 1, du palier magnétique de la figure 1,
- la figure 3 est une vue en coupe transversale selon la ligne III-III représentée à la figure 1, du palier magnétique de la figure 1,
- la figure 4 est une vue en coupe longitudinale d'un deuxième mode de réalisation de palier magnétique selon l'invention,
- la figure 5 est une vue de dessus d'un troisième mode de réalisation de palier magnétique selon l'invention,
- la figure 6 est une vue en coupe transversale selon la ligne VI-VI représentée à la figure 5, du palier magnétique de la figure 5,
- la figure 7 est une vue en coupe transversale selon la ligne VII-VII représentée à la figure 6, du palier magnétique de la figure 6,
- la figure 8 est une vue en coupe longitudinale selon la ligne VIII-VIII de la figure 10, d'un quatrième mode de réalisation de palier magnétique selon l'invention,
- la figure 9 est une vue en coupe longitudinale selon la ligne IX-IX de la figure 10, du quatrième mode de réalisation de palier magnétique, et
- la figure 10 est une vue en coupe transversale selon la ligne X-X de la figure 8 du quatrième mode de réalisation de palier magnétique.

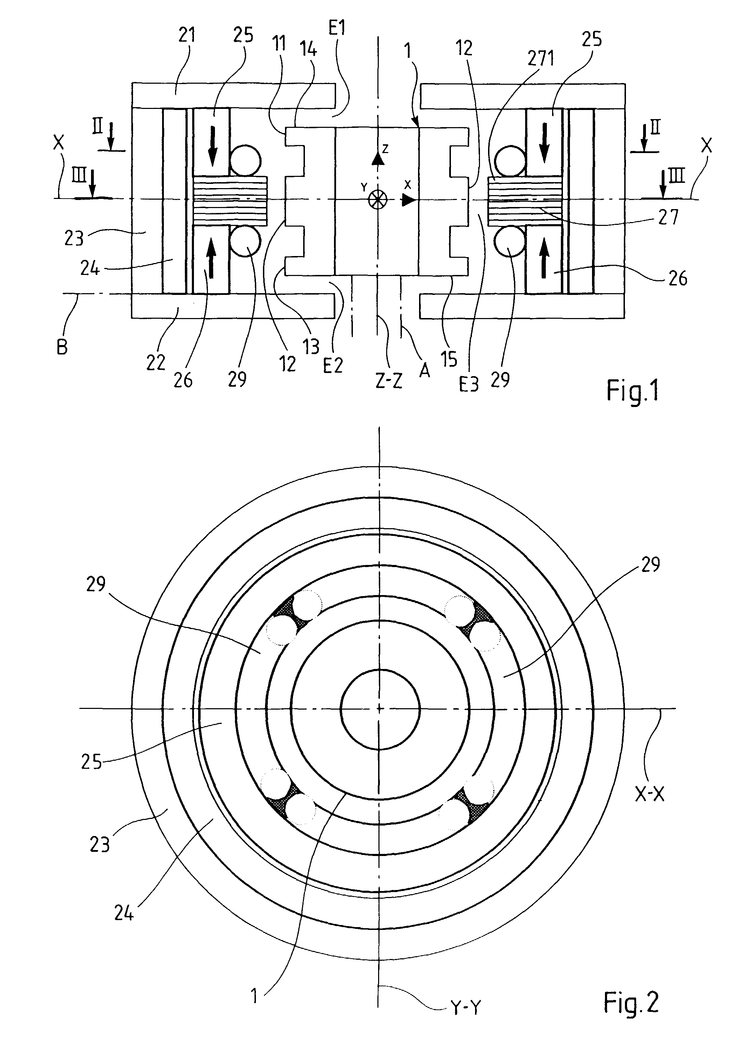

En référence aux **figures 1, 2 et 3**, l'invention s'applique à un palier magnétique comportant une partie rotorique 1 et une partie statorique 2. Ces parties 1 et 2 sont solidaires d'un rotor A et d'un stator B, respectivement.

Le rotor A est un arbre cylindrique d'axe de rotation, ou axe longitudinal, Z-Z. On suppose dans la suite que l'axe Z-Z est vertical, bien qu'il puisse adopter toute inclinaison par rapport à la verticale. Au moins dans la partie en vis à vis de la partie statorique 2, la partie rotorique 1 est d'une manière générale une couronne magnétique et plus précisément un cylindre réalisé en un matériau ferromagnétique et constitue ainsi une pièce polaire qui est avantageusement pourvue de trois collerettes 11, 12 et 13. Les collerettes 11 et 13, respectivement supérieure et inférieure, encadrent la collerette médiane 12. Cette dernière présente une hauteur selon l'axe Z-Z qui est ici sensiblement le triple de celle des deux autres collerettes 11 et 13.

L'axe Z-Z constitue un premier axe, longitudinal, de centrage du palier selon l'invention.

Le palier comporte deux axes radiaux, ou transversaux, de centrage X-X et Y-Y perpendiculaires à l'axe de rotation Z-Z du rotor A.

La partie statorique 2 comporte deux plaques ferromagnétiques parallèles, identiques en forme de disque 21 et 22. Les plaques 21 et 22 sont des pièces polaires, dites pièces polaires principales, perpendiculaires à l'axe Z-Z, et centrées sur cet axe.

Un cylindre ferromagnétique 23 d'axe Z-Z relie les plaques 21 et 22. Il est ici inséré entre celles-ci. Le cylindre 23 a une épaisseur sensiblement égale à celle des plaques 21 et 22 et un diamètre extérieur égal à celui des plaques 21 et 22. Les plaques 21 et 22 et le cylindre 23 forment une cavité annulaire centrée sur l'axe Z-Z.

Dans le plan de la figure 1, les pièces polaires principales 21 et 22, le cylindre ferromagnétique 23 et la couronne magnétique 1 forment deux circuits magnétiques disposés symétriquement de part et d'autre de l'axe de rotation Z-Z.

Une bobine 24 en forme de couronne cylindrique est centrée sur l'axe Z-Z et disposée contre la surface intérieure du cylindre 23. La bobine 24 a sensiblement la même hauteur selon l'axe Z-Z que le cylindre 23 et s'étend entre les plaques 21 et 22.

Deux aimants permanents, cylindriques et identiques 25 et 26 sont disposés de part et d'autre d'une troisième pièce polaire 27. L'ensemble formé de la superposition de l'aimant 25, de la pièce polaire 27 et de l'aimant 26 est situé dans l'espace intérieur de la bobine 24 et est centré sur l'axe Z-Z. Les aimants 25 et 26 ont des aimantations parallèles à l'axe de rotation Z-Z, et de sens opposés, par exemple toutes deux dirigées vers la pièce polaire 27. La pièce polaire 27 est globalement annulaire, par exemple sous la forme d'un disque ayant un diamètre extérieur égal à celui des aimants 25 et 26 et un diamètre intérieur inférieur à celui des aimants 25 et 26, de manière à former une collerette 271. La pièce polaire 27 a une hauteur suivant l'axe Z-Z sensiblement égale à celle de la collerette 12. La pièce polaire 27 est de préférence constituée d'un empilage de tôles moteur fer-silicium parallèles au plan défini par les axes X-X et Y-Y, ce qui favorise des trajets de flux magnétique dans des plans parallèles au plan précédent.

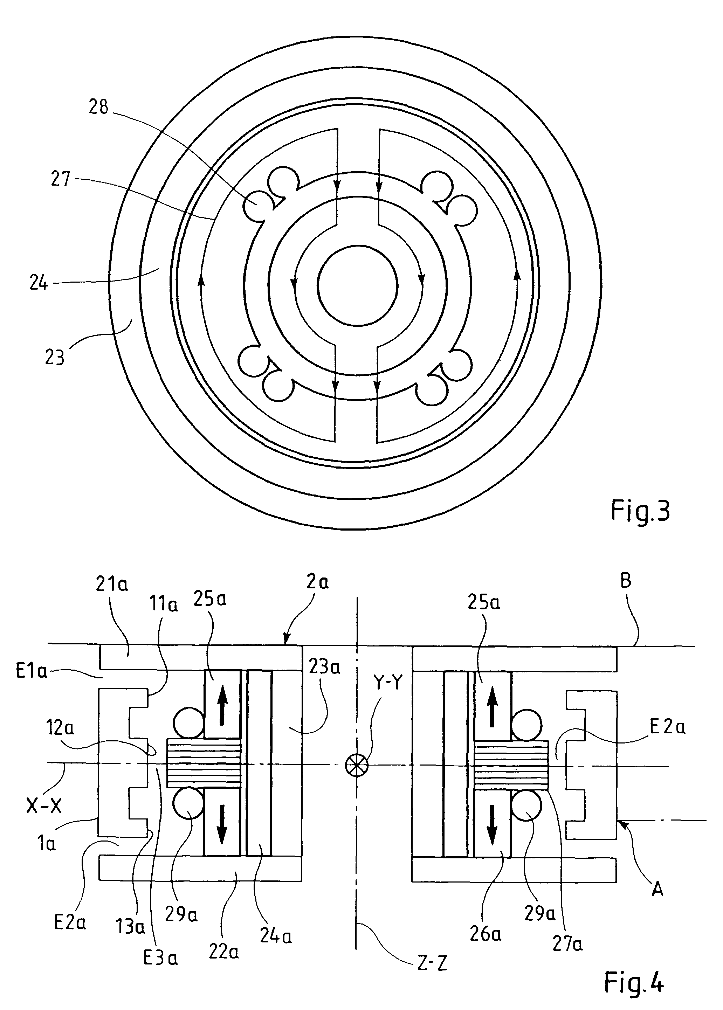

Comme le montre plus particulièrement **la figure 3**, huit perçages identiques 28 sont ménagés dans la pièce polaire 27 parallèlement à l'axe Z-Z. Les perçages 28 sont situés dans la collerette 271, à une même distance de l'axe Z-Z. Les perçages 28 sont groupés par deux, les quatre groupes de perçages voisins étant régulièrement répartis dans la collerette 271 en étant sensiblement centrés sur des axes décalés de 45 degrés par rapport aux axes X-X et Y-Y.

Quatre bobines en haricot 29 de section correspondant au diamètre des perçages 28 sont insérées dans les perçages 28. Une bobine en haricot 29 comporte une portion supérieure en arc de cercle s'étendant sur la collerette 271 entre deux perçages consécutifs éloignés 28 en suivant le contour intérieur de l'aimant 25. La portion supérieure de la bobine 29 se prolonge en deux portions intermédiaires traversant respectivement les deux perçages 28 pour déboucher au-dessous de la collerette 271 et se rejoindre par une portion inférieure identique à la portion supérieure. Deux bobines 29 sont centrées sur l'axe X-X et les deux autres bobines 29 sont centrées sur l'axe Y-Y.

Les bobines 29 et la pièce polaire 27 sont disposées entre la première bobine 24, les pièces polaires 21 et 22 et la partie rotorique 1.

Selon un mode de réalisation simplifié non représenté, le palier magnétique comporte l'axe longitudinal de centrage et un seul axe transversal de centrage. Le palier n'est alors muni que d'une paire de bobines 29, disposées en vis à vis symétriquement par rapport à l'axe Z-Z.

Selon d'autres variantes, le palier comporte plus de deux paires de bobines 29, par exemple trois ou quatre. Il comporte alors autant d'axes transversaux de centrage, ce qui permet un centrage transversal plus précis.

Comme le montre plus particulièrement la figure 1, le palier magnétique selon l'invention comporte trois entrefers E1, E2 et E3. Les premiers entrefers E1 et E2 s'étendent entre la partie rotorique 1 et les pièces polaires 21 et 22. Plus précisément, le premier entrefer E1 s'étend entre la face supérieure 14 de la partie rotorique 1 et une portion de la face inférieure de la pièce polaire supérieure 21.

Il est à noter que la collerette 11 augmente la surface de la face supérieure 14, et donc favorise le passage du flux magnétique par l'entrefer E1.

Le second entrefer E2 s'étend entre la face inférieure 15 de la partie rotorique 1 et une portion de la face supérieure de la pièce polaire inférieure 22. Le second entrefer est analogue au premier entrefer E1.

Les entrefers E1 et E2, dits entrefers principaux, sont d'épaisseur variable parallèlement à l'axe de rotation Z-Z.

Le troisième entrefer E3 s'étend entre la collerette 12 et la pièce polaire 27. L'entrefer E3; dit entrefer intermédiaire, est d'épaisseur variable parallèlement aux axes transversaux.

II est à noter que le rotor A, qui peut se prolonger de part et d'autre de la partie rotorique selon l'axe Z-Z, est en matériau amagnétique pour éviter une propagation de flux magnétique en dehors des pièces ferromagnétiques précédemment décrites. A défaut, il faut prendre garde à ne pas créer d'entrefer radial parasite entre les plaques 21 et 22 et ce rotor A.

L'aimant permanent 25 génère un flux magnétique passant dans la pièce polaire 27, l'entrefer E3, la partie rotorique 1, l'entrefer E1 et la pièce polaire 21. De même, l'aimant permanent 26 génère un flux magnétique passant dans la pièce polaire 27, l'entrefer E3, la partie rotorique 1, l'entrefer E3 et la pièce polaire 22.

Les deux aimants étant identiques et d'aimantation longitudinale de sens opposés, les flux générés créent un équilibre instable de position de la partie rotorique 1 par rapport à la partie statorique 2.

Lorsqu'un courant électrique passe dans la bobine 24, un flux d'induction est généré qui passe par la pièce polaire 21, l'entrefer E1, la partie rotorique 1, l'entrefer E2, la pièce polaire 22 et le cylindre 23.

Le sens du flux induit par la bobine 24 dépend du courant qui passe dans la bobine 24 ; le flux induit s'additionne à l'un des flux générés par les aimants 25 et 26 et s'oppose à l'autre de ces flux. Ainsi le flux induit par la bobine 24 provoque une force propre à déplacer le rotor suivant l'axe longitudinal Z-Z. Il est ainsi possible de centrer de manière active le palier magnétique selon l'axe longitudinal Z-Z.

Le flux généré par la bobine 24 ne peut pas passer par les aimants 25 et 26, et donc ne passe pas par l'entrefer E3. Ce flux n'a pas d'influence sur la position radiale de la partie rotorique 1 par rapport à la partie statorique 2.

D'autre part, lorsqu'un courant électrique passe dans deux bobines en haricot 29 disposées en vis à vis, par exemple les bobines centrées sur l'axe X-X, un flux magnétique est induit et circule dans la pièce polaire 27 et la partie rorotique 1, en traversant à deux reprises l'entrefer E3 parallèlement à l'axe transversal de centrage et en revenant circonférentiellement (cf. figure 3) le long de la pièce polaire 27). Le flux magnétique induit par une bobine 29 ne peut pas passer par les aimants 25 et 26. Les lignes de flux demeurent sensiblement horizontales, c'est-à-dire parallèles au plan défini par les axes X-X et Y-Y.

Le flux induit par les deux bobines 29 provoque une force propre à déplacer la partie rotorique suivant l'axe transversal X-X. Le fonctionnement est identique selon l'axe Y-Y. Il est ainsi possible de centrer de manière active le palier magnétique selon les axes transversaux X-X et Y-Y.

Un courant électrique passant dans les bobines 29 ne génère aucun flux passant dans les entrefers supérieur et inférieur E1 et E2. Les circuits de centrage selon l'axe Z-Z et selon les axes X-X et Y-Y sont magnétiquement découplés. Il est à noter cependant que si une fraction du flux induit par une bobine 29 traversée par un courant passait par les entrefers E1 et E2, cette fraction de flux se partagerait entre les entrefers E1 et E2, et aurait dans ces deux entrefers des influences sensiblement opposées entre elles, c'est-à-dire n'aurait aucune influence sur la position longitudinale de la partie rotorique.

En référence à l**a figure 4**, un second mode de réalisation de palier magnétique selon l'invention se différencie du mode précédent en ce que la partie rotorique est à l'extérieur de la partie statorique. Les mêmes références numériques, suivies de la lettre «a» sont affectées aux éléments de ce palier magnétique qui sont analogues aux éléments du premier palier décrit en référence aux figures 1 à 3.

Le second mode de réalisation de palier magnétique selon l'invention comporte une partie rotorique 1a sous la forme d'un cylindre creux d'axe longitudinal de rotation Z-Z. Sur la face interne de la partie rotorique la sont ménagées trois collerettes 11a, 12a et 13a.

La partie rotorique 1a est entourée selon l'axe Z-Z par deux pièces polaires 21a et 22a de la partie statorique 2a de manière à former deux entrefers E1a et E2a. Les pièces polaires 21a et 22a sont deux plaques ferromagnétiques identiques en forme de disque, parallèles et disposées transversalement à l'axe Z-Z. Le diamètre extérieur des plaques 21a et 22a est égal à celui de la partie rotorique 1a.

La partie statorique 2a comporte également un cylindre ferromagnétique 23a centré sur l'axe Z-Z, qui relie les pièces polaires 21a et 22a à leur diamètre le plus petit. Une bobine en couronne cylindrique 24a entoure le cylindre 23a. Deux aimants permanents 25a et 26a sont disposés de part et d'autre, selon l'axe Z-Z, d'une pièce polaire 27a qui définit un entrefer E2a avec la collerette 12a. Les aimants 25a et 26a ont des aimantations longitudinales opposées, par exemple divergentes. Les aimants 25a et 26a et la pièce polaire 27a sont cylindriques, centrés sur l'axe Z-Z et entourent la bobine 24a. La pièce polaire 27a comporte quatre bobines en haricot 29a.

Le fonctionnement de ce palier magnétique est analogue à celui précédemment décrit.

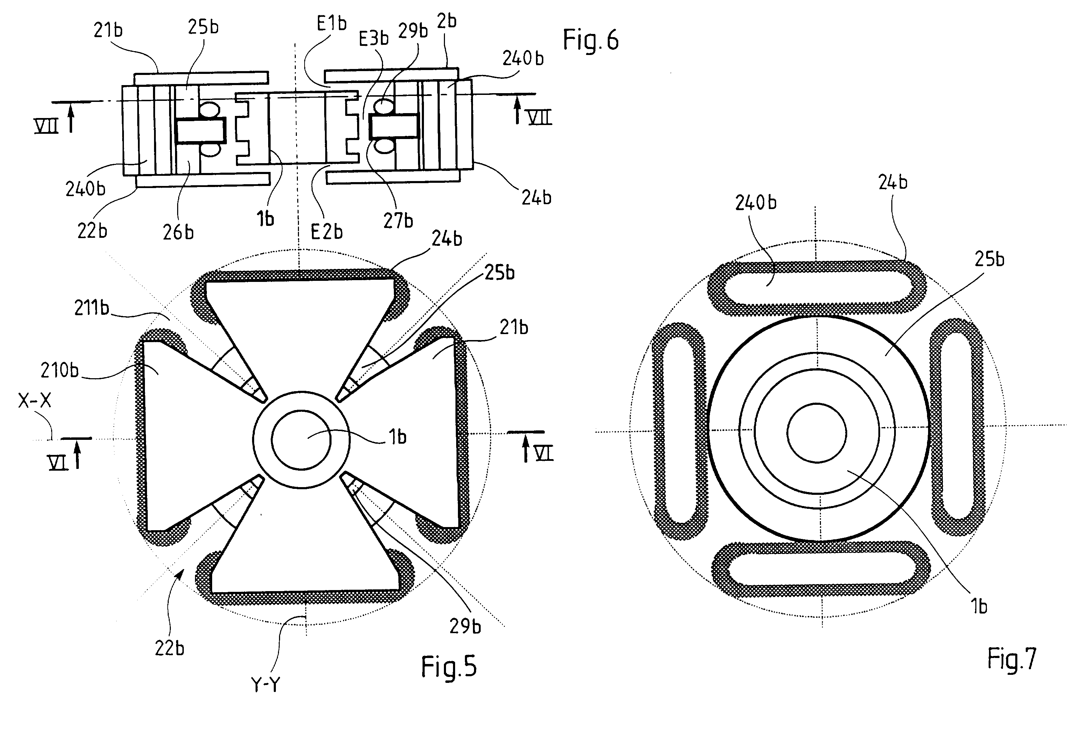

En référence aux **figures 5 à 7**, un troisième mode de réalisation de l'invention se différencie du premier mode (figures 1 à 3) en ce que la bobine en couronne cylindrique est remplacée par quatre bobines identiques régulièrement réparties sur le pourtour du palier magnétique, et en ce que les deux pièces polaires inférieure et supérieure en forme de disque sont remplacées par des pièces en forme de croix, comportant des entailles. Les mêmes références numériques, suivies de la lettre «b» sont affectées aux éléments de ce palier magnétique qui sont analogues aux éléments du premier palier décrit.

Le rotor 1b, les aimants 25b et 26b, la pièce polaire 27b, les bobines 29b sont identiques aux mêmes éléments décrits en référence aux figures 1 à 3. Les entrefers E1b, E2b et E3b sont analogues à ceux du premier mode de réalisation.

Quatre bobines identiques 24b, respectivement enroulées autour d'un noyau 240b avantageusement muni d'une cale statique, sont disposées par paire sur l'axe X-X et sur l'axe Y-Y.

Les pièces polaires 21b et 22b sont respectivement au-dessus et au-dessous des bobines 24b, en supposant que l'axe Z-Z est vertical. La pièce polaire 21b est en forme de croix à quatre branches 210b, séparées par des entailles 211b. Chacune des branches 210b surmonte une bobine 24b et chaque entaille est centrée sur un axe passant entre les bobines 24b, sensiblement à 45 degrés des axes X-X et Y-Y.

La pièce polaire 22b est identiques à la pièce polaire 21b.

Ce mode de réalisation présente les avantages suivants.

D'une part, si les quatre bobines 24b sont traversées par un même courant électrique, le fonctionnement de ce palier magnétique est identique à celui du palier décrit en référence aux figures 1 à 3. Un courant électrique dans les bobines 24b permet un centrage actif selon l'axe longitudinal Z-Z. Le centrage actif selon les axes radiaux X-X et Y-Y est assuré par les bobines en haricot 29b.

Si les quatre bobines 24b sont traversées par des courants différents, il est possible de commander un basculement de la partie rotorique par rapport à la partie statorique. En effet, un flux induit par une première bobine 24b passe dans la pièce polaire 21b, l'entrefer E1b, la partie rotorique 1b, l'entrefer E2b et la pièce polaire 22b. Grâce aux entailles 211b, ce flux est concentré dans sensiblement un quart du palier magnétique et augmente selon l'axe Z-Z l'un des entrefers E1b et E2b, en diminuant l'autre sur sensiblement un quart des entrefers E1b et E2b. Ce flux impose alors un basculement de la partie rotorique 1b.

Le basculement peut être accentué par un second flux induit par la bobine 24b placée en vis à vis de la première bobine 24b. Le second flux a un trajet en sens inverse par rapport au premier flux, dans le quart de palier magnétique en vis à vis du premier flux. L'effet du second flux sur les entrefers E1 b et E2b est alors inverse de celui du premier flux, et ce dans des zones en vis à vis de ces entrefers.

D'autre part, le troisième mode de réalisation présente également l'avantage d'être construit à partir d'éléments, notamment les bobines 24b, de forme courante dans la conception de palier magnétique, ce qui rend plus économique sa fabrication, tout en présentant les avantages spécifiques de l'invention, grâce à l'agencement particulier selon l'invention.

Enfin, le troisième mode de réalisation est moins lourd que le premier mode de réalisation en raison de la forme des pièces polaires 21b et 22b, ce qui est avantageux dans certaines applications où l'on cherche à diminuer le poids du palier magnétique, tout en conservant les mêmes performances.

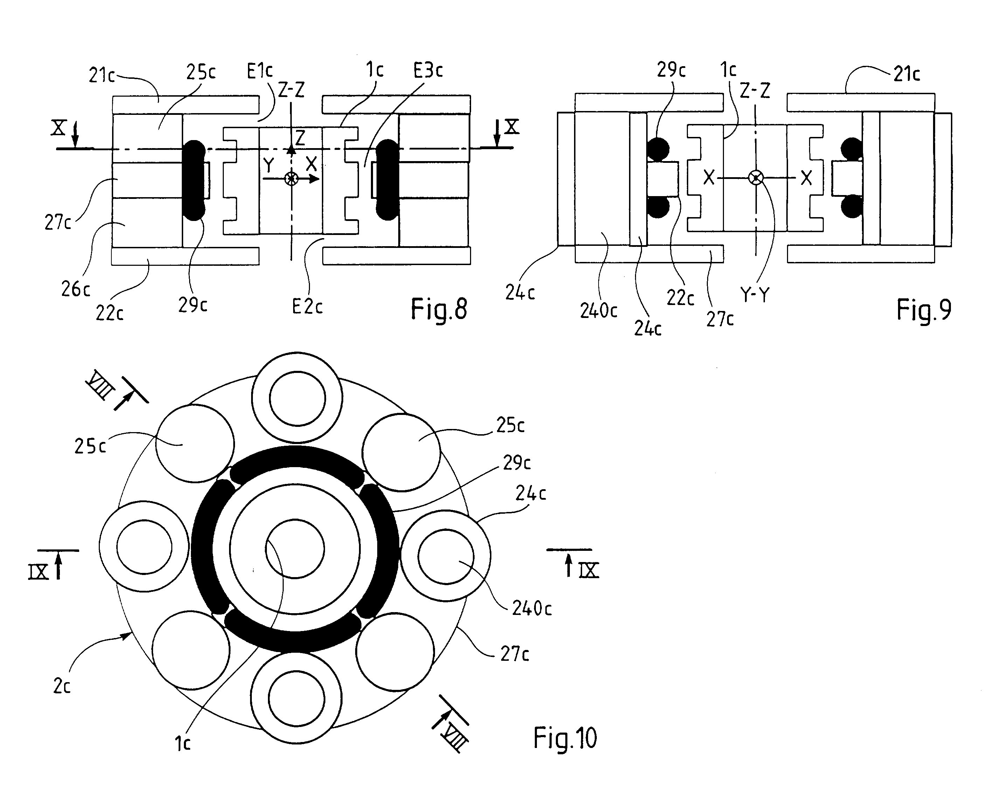

En référence aux **figures 8 à 10**, un quatrième mode de réalisation de palier magnétique selon l'invention se différencie du premier mode (figures 1 à 3) en ce que la bobine en couronne cylindrique est remplacée par quatre bobines identiques régulièrement réparties sur le pourtour du palier magnétique, et en ce que les deux aimants cylindriques sont remplacés par huit aimants disposés sur le pourtour du palier magnétique. Les mêmes références numériques, suivies de la lettre «c» sont affectées aux éléments de ce palier magnétique qui sont analogues aux éléments du premier palier décrit.

La partie rotorique 1c, les pièces polaires 21c et 22c sont identiques aux mêmes éléments décrits en référence aux figures 1 à 3. Les entrefers E1c, E2c et E3c sont analogues à ceux du premier mode de réalisation.

Une pièce polaire 27c, sous la forme d'un disque transversal à l'axe Z-Z comporte huit premiers perçages pour recevoir les quatre bobines en haricot 29c. La pièce polaire 27c comporte également quatre perçages longitudinaux dans lesquels sont insérées quatre bobines identiques 24c de forme cylindrique. Les quatre bobines 24c sont régulièrement réparties autour de l'axe Z-Z, sur le pourtour du palier magnétique, sur les axes X-X et Y-Y. Les bobines 24c sont enroulées sur des noyaux respectifs 240c.

Entre les bobines 24c, dans le plan de la figure 10, huit aimants permanents sont disposés par paires sur des axes à 45 degrés des axes X-X et Y-Y. Une paire d'aimants permanents comporte un aimant supérieur 25c et un aimant inférieur 26c, identiques et d'aimantation de sens opposé, disposés de part et d'autre de la pièce polaire 27c, c'est-à-dire entre cette dernière pièce et les pièces polaires 21c et 22c. Les aimants 25c et 26c ont la forme d'un palet.

Ce mode de réalisation utilise des aimants 25c, 26c de plus petite taille que les réalisations précédentes. Ces aimants sont plus simples à fabriquer que les aimants en forme de couronne.

Le fonctionnement de ce palier magnétique est analogue à celui précédemment décrit.

Le palier magnétique dans ses différents modes de réalisation est d'un encombrement plus réduit dans le sens longitudinal que les paliers selon la technique antérieure, qui comportent un premier palier pour le centrage actif selon l'axe longitudinal et un second palier pour le centrage actif selon un ou deux axes transversaux, tout en ayant des performances au moins équivalentes.

Bien entendu, la présente invention n'est nullement limitée aux modes de réalisation décrits et représentés, mais englobe, bien au contraire, toute variante à la portée de l'homme du métier.

En particulier, les parties statoriques et rotorique peuvent être échangées.

## Revendications

1. Palier magnétique pour le centrage d'un corps rotatif mobile (A) sans contact par rapport à un corps fixe (B) autour d'un axe de rotation (Z-Z), ayant au moins un axe transversal (X-X, Y-Y) perpendiculaire à l'axe de rotation, et comportant
- deux circuits magnétiques disposés symétriquement de part et d'autre de l'axe de rotation, le long de l'axe transversal, et formés chacun de première et seconde parties ferromagnétiques destinées à être portées respectivement par lesdits corps et séparées par deux entrefers principaux (E1, E2) décalés parallèlement à l'axe de rotation, la première partie ferromagnétique comportant deux pièces polaires principales (21, 22) perpendiculaires à l'axe de rotation, et la seconde partie ferromagnétique (1) étant une couronne magnétique,
- des moyens (25, 26) à aimantation permanente parallèle à l'axe de rotation (Z-Z), disposés entre les pièces polaires principales de chaque circuit magnétique et générant des flux magnétiques au travers des entrefers principaux (E1, E2),
- au moins une première bobine (24) adaptée à générer dans au moins l'un des circuits magnétiques un flux magnétique commandable dans les entrefers principaux (E1, E2),
ce palier magnétique étant caractérisé en ce que
- les entrefers principaux (E1, E2) sont d'épaisseur variable parallèlement à l'axe de rotation (Z-Z), grâce à quoi la première bobine assure un centrage parallèlement à cet axe de rotation,
- une pièce ferromagnétique intermédiaire (27) globalement annulaire et perpendiculaire à l'axe de rotation, solidaire de chaque première partie ferromagnétique, est disposée entre les pièces polaires principales (21, 22) de chaque première partie ferromagnétique et est séparée de la couronne ferromagnétique (1) par deux entrefers intermédiaires (E3, E3a, E3b, E3c) décalés parallèlement à l'axe transversal et d'épaisseur variable parallèlement à ce dernier,
- les moyens à aimantation permanente comportent, dans chaque première partie ferromagnétique, deux aimants à sens opposés d'aimantation enserrés entre les pièces polaires principales (21, 22) et la pièce polaire intermédiaire (27), respectivement, et
- au moins une seconde bobine (29) est disposée en sorte de générer dans la pièce polaire intermédiaire (27) un flux magnétique commandable traversant les deux entrefers intermédiaires (E3), grâce à quoi ladite seconde bobine assure un centrage transversal.

2. Palier magnétique selon la revendication 1, caractérisé en ce que les premières parties ferromagnétiques sont destinées à être portées par le corps fixe (B).

3. Palier magnétique selon l'une quelconque des revendications 1 ou 2, caractérisé en ce que la couronne ferromagnétique (1) est disposée entre les premières parties ferromagnétiques.

4. Palier magnétique selon l'une quelconque des revendications 1 ou 2, caractérisé en ce que la couronne ferromagnétique (1) est disposée autour des premières parties ferromagnétiques.

5. Palier magnétique selon l'une quelconque des revendications 1 à 4, caractérisé en ce que deux autres circuits magnétiques de même structure sont disposés de part et d'autre de l'axe de rotation (Z-Z) le long d'un second axe transversal de centrage perpendiculaire à l'axe de rotation, comportant deux autres premières parties ferromagnétiques coopérant avec la couronne ferromagnétique (1) au travers de deux autres entrefers principaux (E1, E2) d'épaisseur variable parallèlement à l'axe de rotation, une bobine (24) étant adaptée à générer un flux magnétique commandable dans ces deux autres circuits magnétiques, d'autres aimants permanents à sens opposés d'aimantation étant disposés dans ces deux autres premières parties ferromagnétiques de part et d'autre de la pièce polaire intermédiaire, ladite pièce polaire intermédiaire étant séparée de la couronne magnétique par deux autres entrefers intermédiaires, et au moins une bobine étant adaptée à générer un flux magnétique commandable dans lesdits deux autres entrefers intermédiaires.

6. Palier magnétique selon l'une quelconque des revendications 1 à 5, caractérisé en ce que ladite au moins une première bobine (24, 24a) est en forme de couronne cylindrique et en ce que lesdites pièces polaires principales (21, 22 ; 21a, 22a) sont des disques parallèles, perpendiculaires à l'axe de rotation du palier magnétique, disposés de part et d'autre de la première bobine, ladite première bobine et lesdites pièces polaires principales étant centrées sur l'axe de rotation (Z-Z).

7. Palier magnétique selon la revendication 6, caractérisé en ce que la première partie ferromagnétique comporte une pièce ferromagnétique cylindrique (23, 23a) entre lesdites pièces polaires principales, à l'un des diamètres supérieur ou inférieur desdites pièces polaires principales (21, 22 ; 21a, 22a).

8. Palier magnétique selon l'une quelconque des revendications 1 à 7, caractérisé en ce que les moyens à aimantation permanente comportent deux aimants permanents (25, 26 ; 25a, 26a ; 25b, 26b) en forme de couronne cylindrique centré sur l'axe de rotation (Z-Z).

9. Palier magnétique selon l'une quelconque des revendications 1 à 7, caractérisé en ce que les moyens à aimantation permanente comportent plusieurs paires d'aimants permanents (25c, 26c) répartis autour de l'axe de rotation (Z-Z).

10. Palier magnétique selon l'une quelconque des revendications 1 à 9, caractérisé en ce que ladite seconde bobine (29, 29a, 29b, 29c) est une bobine en haricot.

11. Palier magnétique selon l'une quelconque des revendications 1 à 10, caractérisé en ce que la couronne magnétique comporte une collerette (12, 12a, 12b, 12c) sensiblement en vis à vis de la pièce ferromagnétique intermédiaire.

12. Palier magnétique selon l'une quelconque des revendications 1 à 11, caractérisé en ce que la couronne magnétique comporte des collerettes (11, 12 ; 11a, 12a ; 11b, 12b ; 11c, 12c) s'étendant sensiblement en vis à vis desdites pièces polaires principales.

13. Palier magnétique selon l'une quelconque des revendications 1 à 12, caractérisé en ce qu'il comporte une unique première bobine (24) en forme de couronne cylindrique centrée sur l'axe de rotation (Z-Z).

14. Palier magnétique selon l'une quelconque des revendications 1 à 12, caractérisé en ce qu'il comporte plusieurs premières bobines (24c) réparties autour de l'axe de rotation (Z-Z).
